# EUROPEAN PATENT APPLICATION

(11) **EP 4 793 997 A1**
(43) Date of publication of application: **19.08.2026**
(21) Application number: 26156868.7
(22) Date of filing: 06.02.2026
(51) Int. Cl.: H01M 4/02, H01M 4/04, H01M 10/04, H01M 10/42, H01M 50/474, H01M 50/477, H01M 50/489, H01M 50/534

(54) **ELECTRODE SHEET, SECONDARY BATTERY AND ELECTRONIC DEVICE**

(30) Priority: 18.02.2025 CN 202520264630 U
(71) Applicant: AESC Japan Ltd., Yokohama-shi, Kanagawa 220-0012 (JP)
(72) Inventor: DAI, Liangzhen, Jiangyin City, Wuxi City (CN); CHEN, Shenghua, Jiangyin City, Wuxi City (CN); KONG, Deyong, Jiangyin City, Wuxi City (CN); ZHANG, Shuhan, Jiangyin City, Wuxi City (CN); CHEN, Lipeng, Jiangyin City, Wuxi City (CN); YIN, Zhe, Jiangyin City, Wuxi City (CN)
(74) Representative: Becker, Eberhard

(57) **Abstract**

An electrode sheet (100, 100A, 100B), a secondary battery (500), and an electronic device (1000) are provided. The electrode sheet (100, 100A, 100B) includes: an electrode sheet body (160); and an electrode tab (150, 150') extending from the electrode sheet body (160) in a first direction (D1), where a stiffener (190) is disposed on a surface of the electrode tab (150, 150'), where the stiffener (190) at least includes a first portion (192) and a second portion (194), the first portion (192) and the second portion (194) are connected through a bending part (196). An angle formed by the first portion (192) and the second portion (194) is a, 28°≤a≤45°.

## Description

### BACKGROUND

### Technical Field

The disclosure relates to a field of battery technology, and in particular to an electrode sheet, a secondary battery, and an electronic device.

### Related Art

For secondary batteries in a field of new energy power batteries, copper foil and aluminum foil are generally used as current collectors of electrode sheets. With the thinning of foil materials, the bending resistance strength of the foil materials themselves is extremely low. A phenomenon of electrode tab folding is prone to occur, which greatly affects the efficiency and yield of battery production.

The existing technology enhances the bending resistance strength of the electrode tab by disposing stiffeners on a surface of the electrode tab. Compared with the electrode tab without stiffeners, the strength of the electrode tab may be enhanced and the possibility of electrode tab bending may be reduced. However, the existing stiffener structures still have a problem of insufficient strengthening effect.

### SUMMARY

In view of the problems existing in the related art, a purpose of the disclosure is to provide an electrode sheet, a secondary battery, and an electronic device, which may at least provide a more effective strengthening effect for the electrode tab and effectively avoid electrode tab fracturing.

To achieve the aforementioned purpose, an embodiment of the disclosure provides an electrode sheet including an electrode sheet body; and an electrode tab, extending from the electrode sheet body in a first direction, where a stiffener is disposed on a surface of the electrode tab, and at least includes a first portion and a second portion, the first portion and the second portion are connected through a bending part, and an angle formed by the first portion and the second portion is a, 28°≤a≤45°. The aforementioned technical solution of the disclosure may at least provide a more effective strengthening effect for the electrode tab and effectively avoid electrode tab fracturing.

In some embodiments, 30°≤a≤35°.

In some embodiments, the bending part has an inner round part, the inner round part is connected to inner side edges of the first portion and the second portion opposite to each other, and an arc radius of the inner round part is Rn, where Rn≥0.5mm.

In some embodiments, the bending part has an outer round part, the outer round part is connected to outer side edges of the first portion and the second portion, and an arc radius of the outer round part is Ro, where Ro≥1.5mm.

In some embodiments, Ro>Rn.

In some embodiments, a width of the first portion is set as w, a recess depth of the first portion relative to a surface of the electrode tab in a thickness direction is h, and then 1.1≤w/h≤6.67.

In some embodiments, 1.15≤w/h≤2.4.

In some embodiments, the stiffener includes multiple first portions and multiple second portions alternately arranged in a second direction, the first portion and the second portion adjacent to each other are connected through the bending part, and the second direction is perpendicular to the first direction.

An embodiment of the disclosure further provides a secondary battery. The secondary battery includes an electrode assembly. The electrode assembly includes a positive electrode sheet, a negative electrode sheet, and a separator located between the positive electrode sheet and the negative electrode sheet, where at least one of the positive electrode sheet and the negative electrode sheet is the electrode sheet of any one of the above.

An embodiment of the disclosure further provides an electronic device, including the secondary battery of any one of the above.

In the aforementioned technical solution of the disclosure, by setting the angle a formed by the first portion and the second portion constituting the stiffener on the electrode tab to be 28°≤a≤45°, a more effective strengthening effect may be provided for the electrode tab, and fracture of the electrode tab may be effectively avoided at the same time.

### BRIEF DESCRIPTION OF THE DRAWINGS

In order to more clearly describe the technical solutions in the embodiments of the disclosure or the prior art, the accompanying drawings required to be used in the description of the embodiments or the prior art are briefly introduced below. Obviously, the accompanying drawings in the following description are some embodiments of the disclosure, and for those of ordinary skill in the art, other accompanying drawings may also be obtained according to the accompanying drawings without creative efforts.
FIG. 1A to FIG. 1F are schematic views of different stages of manufacturing an electrode sheet according to an embodiment of the disclosure.
FIG. 2 is a partially enlarged schematic view of a portion of a stiffener in FIG. 1F.
FIG. 3A is a partially enlarged schematic view of a portion of a stiffener in FIG. 1F.
FIG. 3B is a schematic cross-sectional view of a stiffener on an electrode tab.
FIG. 4A to FIG. 4B are schematic views of different stages of manufacturing an electrode sheet according to another embodiment of the disclosure.
FIG. 5 is a schematic view of an electrode sheet according to yet another embodiment of the disclosure.
FIG. 6 is a schematic view of a stiffener on an electrode tab according to another embodiment of the disclosure.
FIG. 7 is a perspective schematic view of a secondary battery according to an embodiment of the disclosure.
FIG. 8 is a schematic cross-sectional view of a secondary battery according to an embodiment of the disclosure.
FIG. 9 is a schematic cross-sectional view of an electrode assembly of the secondary battery in FIG. 8.
FIG. 10 is a schematic view when an electronic device is a vehicle according to an embodiment of the disclosure.

### DESCRIPTION OF THE EMBODIMENTS

For a better understanding of the spirit of the embodiments of the disclosure, the following further description is provided in conjunction with some preferred embodiments of the disclosure.

The embodiments of the disclosure are described in detail below. Throughout the specification of the disclosure, the same or similar components and components having the same or similar functions are denoted by similar reference numerals. The embodiments described herein with reference to the accompanying drawings are illustrative and graphical in nature and are configured to provide a basic understanding of the disclosure. The embodiments of the disclosure should not be construed as limitations to the disclosure.

Herein, the terms such as "approximately", "generally", "substantially", and "about" are used to describe and illustrate small variations. When used in conjunction with an event or circumstance, the terms may refer to instances in which the event or circumstance occurs precisely as well as instances in which the event or circumstance occurs in close approximation.

In this specification, unless otherwise specified or limited, relative terms such as "central", "longitudinal", "lateral", "front", "rear", "right", "left", "internal", "external", "lower", "higher", "horizontal", "vertical", "above", "below", "upper", "lower", "top", "bottom", and the derivative terms (such as "horizontally", "downwardly", and "upwardly") should be interpreted as referring to the directions described in the discussion or illustrated in the accompanying drawings. The relative terms are only used for convenience of description and do not require the disclosure to be constructed or operated in a specific orientation.

For convenience, the terms such as "first", "second", and "third" may be used herein to distinguish different components of a drawing or a series of drawings. The terms such as "first", "second", and "third" are not intended to describe corresponding components.

A secondary battery refers to a battery that may continue to be used by activating an active material through charging after the battery is discharged. The types of the secondary battery may include a nickel-metal hydride battery, a nickel-cadmium battery, a lead-acid battery, a lithium-ion battery, a polymer lithium-ion battery, etc. An electrode assembly of the secondary battery mainly includes a positive electrode sheet and a negative electrode sheet. The positive electrode sheet and the negative electrode sheet are separated by a separator. The positive electrode sheet, the negative electrode sheet, and the separator form the electrode assembly through winding or stacking. Then the electrode assembly is sealed in a shell to form the secondary battery.

The positive electrode sheet may include a positive current collector and a positive active material layer. The positive active material layer is coated on a portion of a surface of the positive current collector. The negative electrode sheet may include a negative current collector and a negative active material layer. The negative active material layer is coated on a portion of a surface of the negative current collector. In some embodiments, for example, in a lithium-ion battery, a material of the positive current collector may be aluminum, and a thickness may be 10µm to 12µm. The positive active material layer may include a positive active material. The positive active material may be lithium cobalt oxide, lithium iron phosphate, ternary lithium, or lithium manganate. For a high-nickel ternary lithium battery, the positive active material may be a ternary material composed of three elements: nickel, cobalt, and manganese (or aluminum). A material of the negative current collector may be copper, and a thickness may be 4.5µm to 6 µm. The negative active material layer may include a negative active material. The negative active material may be carbon or silicon. A material of the separator may be, for example, PP (polypropylene) or PE (polyethylene).

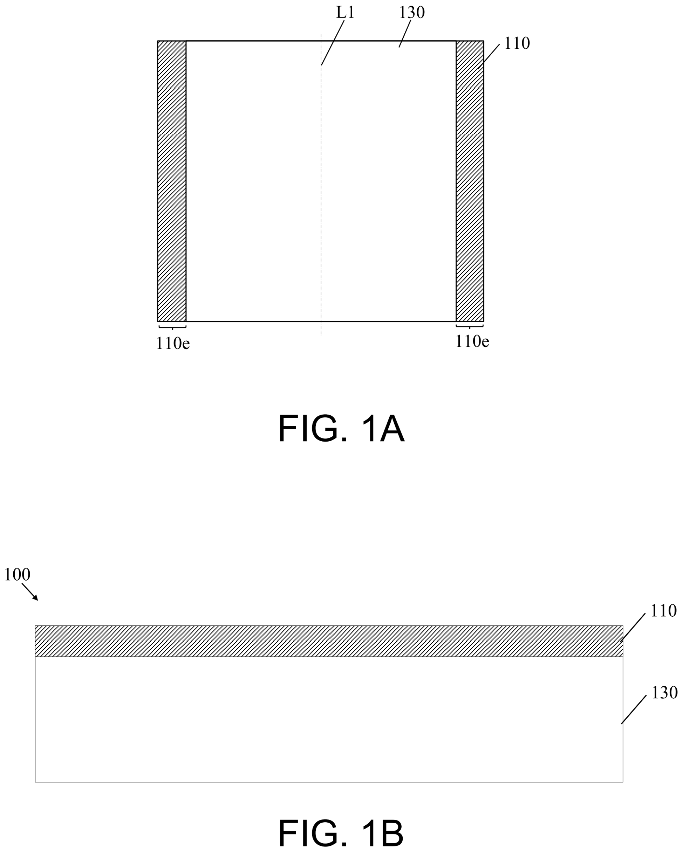

FIG. 1A to FIG. 1F are schematic views of different stages of manufacturing an electrode sheet according to an embodiment of the disclosure. First, referring to FIG. 1A, an active material layer 130 is coated on both surfaces of a current collector 110 opposite to each other in a thickness direction thereof. The active material layer 130 may be coated on the current collector 110 by a coating device. An edge portion 110e in a width direction of the current collector 110 is not coated with the active material layer 130 to form an uncoated area. In some embodiments of forming a negative electrode sheet, the current collector 110 is a negative current collector, and the active material layer 130 is a negative active material layer. In some embodiments, the material of the negative current collector may be, for example, copper, and the thickness may be 4.5µm to 6 µm. In some embodiments of forming a positive electrode sheet, the current collector 110 is a positive current collector, and the active material layer 130 is a positive active material layer. In some embodiments, the material of the positive current collector may be aluminum, and the thickness may be 10µm to 12 µm. After the active material layer 130 is coated, the current collector 110 and the active material layer 130 may be cut along a dashed line L1, thereby obtaining a single electrode sheet 100 configured to form a single electrode assembly as shown in FIG. 1B.

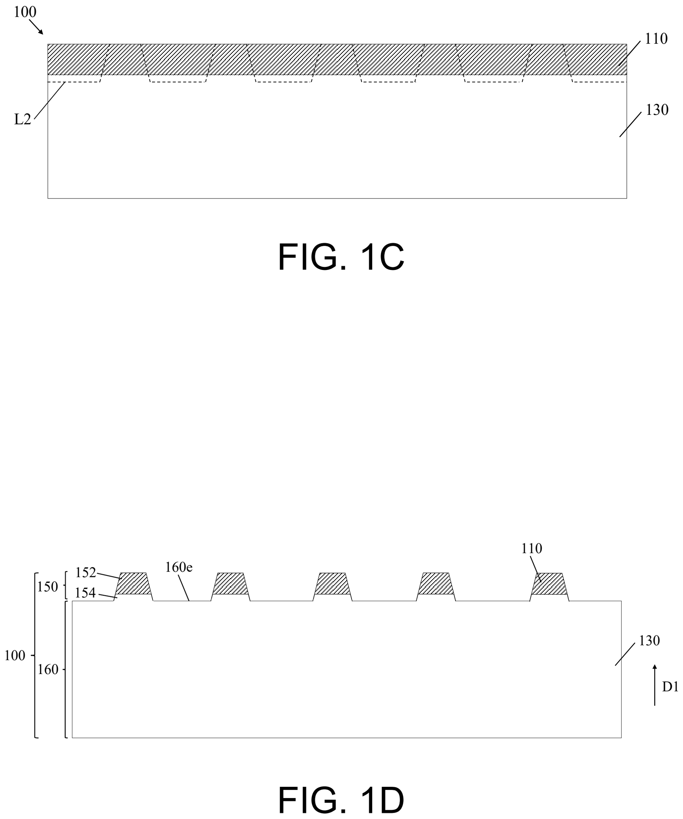

Referring to FIG. 1C, a side of the current collector 110 of the electrode sheet 100 that is not coated with the active material may be cut according to a dashed line L2, and the cutting process may be referred to as electrode tab cutting. After cutting, referring to FIG. 1D, multiple electrode tabs 150 are formed spaced apart in a length direction of the electrode sheet 100. The uncut portions of the current collector 110 and the active material layer 130 may be referred to as an electrode sheet body 160. The electrode sheet body 160 includes the current collector 110 and the active material layer 130, where the active material layer 130 covers two surfaces of the current collector 110 opposite to each other in the thickness direction thereof.

The electrode tab 150 extends from the electrode sheet body 160 in a first direction D1. The first direction D1 is parallel to a width direction of the electrode sheet 100. A second direction D2 is perpendicular to the first direction D1. The second direction D2 is parallel to a length direction of the electrode sheet 100. Specifically, in this embodiment, the electrode tab 150 may include an electrode tab with uncoated area 152. The electrode tab with uncoated area 152 is formed by the current collector 110 not covered by the active material layer 130. The electrode tab 150 may further include an electrode tab with coated area 154. The electrode tab with coated area 154 is connected between the electrode tab with uncoated area 152 and the electrode sheet body 160. The electrode tab with coated area 154 protrudes from an edge 160e of the electrode sheet body 160 perpendicular to the first direction D1. Moreover, the active material layer 130 is also coated on the electrode tab with coated area 154. In the disclosure, the example of forming the electrode tab by cutting the current collector coated with the active material is used for description. The electrode tab involved in the disclosure may also be connected to the electrode sheet body 160 by other methods such as welding.

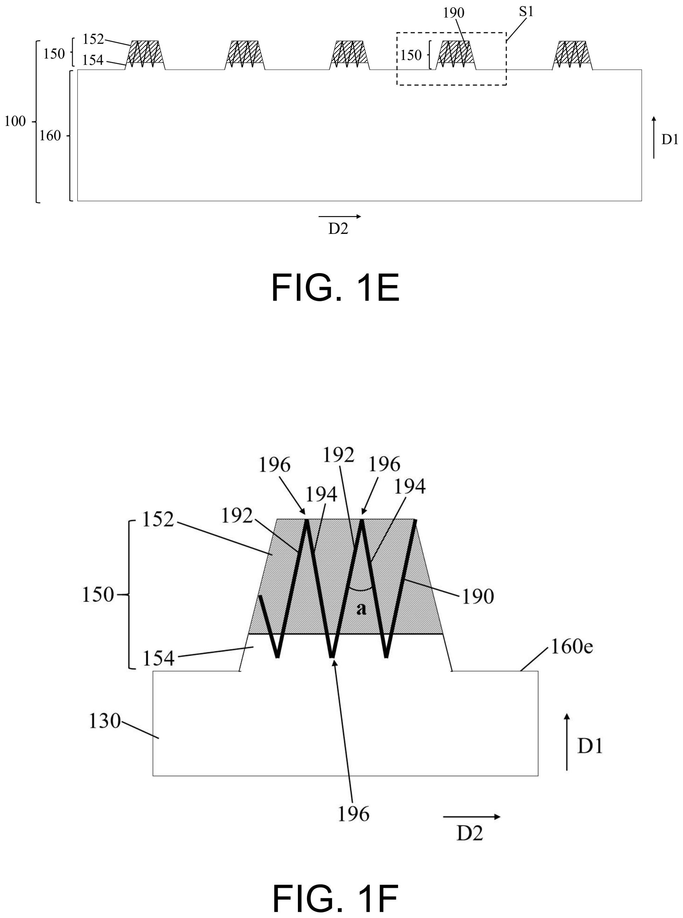

Referring to FIG. 1E and FIG. 1F, FIG. 1F is a partially enlarged schematic view of a region S1 of the electrode sheet 100 shown in FIG. 1E, where stiffeners 190 are formed on a surface of each electrode tab 150. In some embodiments, the stiffeners may be formed before or after the electrode tab is cut. Preferably, before the electrode tab is cut, the electrode tab is rolled by a stiffener roller to form the stiffeners on the electrode tab.

In this embodiment, the stiffener 190 extends to the electrode tab with coated area 154, but does not extend to the electrode sheet body 160. By extending the stiffener 190 to the electrode tab with coated area 154, the bending resistance strength provided by the stiffener 190 for the electrode tab may be increased. In other embodiments, the stiffener 190 may also not extend to the electrode tab with coated area 154.

Specifically, referring to FIG. 1F, the stiffener 190 may include a first portion 192 and a second portion 194. The first portion 192 and the second portion 194 are connected through a bending part 196. Moreover, the first portion 192 and the second portion 194 form an angle a. In some embodiments, a range of the angle a formed by the first portion 192 and the second portion 194 is 28° to 45°, that is, 28°≤a≤45°. In some embodiments, except for different extending directions of the first portion 192 and the second portion 194 on the electrode tab, the shape of the two may be completely the same. In other embodiments, except for different extending directions of the first portion 192 and the second portion 194 on the electrode tab, there are minor differences in the shape of the two.

The first portion 192 and the second portion 194 form an angle a. Since a triangle has good stability, the stability structure formed by the first portion 192 and the second portion 194 similar to a triangle may provide a good strengthening effect for the electrode tab. However, if the angle a is too small, a distance between the first portion 192 and second portion 194 adjacent to each other may be too close. On one hand, when the distance is too close, stress concentration may occur by the over-pressed electrode tab between the adjacent first portion 192 and second portion 194, which may easily lead to electrode tab fracturing and other situations. On the other hand, when the distance is too close, the effect of the first portion 192 and the second portion 194 is close to a single strip-shaped stiffener, which reduces the stability effect of the triangle. If the angle a is too large, a corresponding electrode tab region between the first portion 192 and the second portion 194 becomes wider. At this time, the first portion 192 and the second portion 194 are unable to form an effective strengthening effect on the electrode tab region between the two, and a situation of fold downward toward the electrode sheet body region may easily occur.

Therefore, through experimental verification and research, the inventor found that by setting the first portion 192 and the second portion 194 to form an angle a, and setting the range of the angle a to be 28°≤a≤45°, a more effective strengthening effect may be provided for the electrode tab, while avoiding the fracture of the electrode tab. Preferably, the range of the angle a is 30° to 35°, that is, 30°≤a≤35°. This value range of the angle a may further provide a more effective strengthening effect for the electrode tab, thereby avoiding the fracture of the electrode tab.

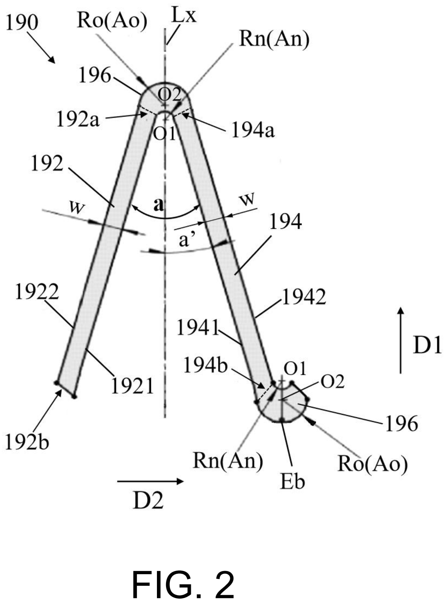

FIG. 2 is a partially enlarged schematic view of a portion of the stiffener 190 in FIG. 1F. Referring to FIG. 2, the stiffener 190 may include a first portion 192 and a second portion 194. The first portion 192 extends longitudinally from one end 192a thereof to another end 192b thereof. The second portion 194 extends longitudinally from one end 194a thereof to another end 194b thereof. The one end 192a of the first portion 192 and the one end 194a of the second portion 194 are connected to each other through a bending part 196. The angle a formed by the first portion 192 and the second portion 194 may be an angle defined between an inner side edge 1921 of the first portion 192 and an inner side edge 1941 of the second portion 194 that are opposite to each other.

More specifically, the bending part 196 has an inner round part An. The inner round part An is located at an inner side of the bending part 196. The inner round part An is connected to the inner side edge 1921 of the first portion 192 and the inner side edge 1941 of the second portion 194 that are opposite to each other. An arc radius of the inner round part An is Rn, and a corresponding circle center is O1. In some embodiments, the arc radius Rn of the inner round part An is ≥0.5mm. For the corresponding value range of the angle a of 28° to 45°, an apex (at the bending part 196) is prone to become a stress concentration region. By setting the inner side of the bending part 196 as the inner round part An, and controlling the arc radius Rn of the inner round part An to be not less than 0.5mm, the stress concentration at the inner side of the bending part 196 may be effectively alleviated.

In addition, the bending part 196 further has an outer round part Ao. The outer round part Ao is located at an outer side of the bending part 196. The outer round part Ao is connected to an outer side edge 1922 of the first portion 192 and an outer side edge 1942 of the second portion 194 that are away from each other. An arc radius of the outer round part Ao is Ro, and a corresponding circle center is O2. In some embodiments, the arc radius Ro of the outer round part Ao is ≥1.5mm. nAs described above, for the corresponding value range of the angle a of 28° to 45°, the apex (at the bending part 196) is prone to become a stress concentration region. By setting the outer side of the bending part 196 as the outer round part Ao, and controlling the arc radius Ro of the outer round part Ao to be not less than 1.5mm, the stress concentration at the outer side of the bending part 196 may be effectively alleviated.

Further, in some embodiments, the arc radius Ro of the outer round part Ao of the bending part 196 is greater than the arc radius Rn of the inner round part An, that is, Ro>Rn. Due to the stress concentration at the bending part 196, by setting the arc radius Ro to be Ro>Rn, the outer round part Ao may be enlarged, and the fracture of the foil material is less likely to occur at the bending part 196 when the stiffener is formed.

An axis line Lx extending through the circle centers O1, O2 may be perpendicular to the second direction D2. The first portion 192 and the second portion 194 may be symmetrical with respect to the axis line Lx, and the bending part 196 may be symmetrical with respect to the axis line Lx. An angle formed between the first portion 192 or the second portion 194 and the axis line Lx is 1/2 of the angle a. For example, as shown in FIG. 2, an angle a' between the inner side edge 1941 of the second portion 194 and the axis line Lx is 1/2 of the angle a. The bending part 196 connected to another end 194b of the second portion 194 has an end point Eb in a reverse direction of the first direction D1. The end point Eb and the circle centers O1, O2 of the corresponding inner round part An and outer round part Ao may be located on the same straight line extending in the first direction D1.

In some embodiments where the stiffener 190 extends to the electrode tab with coated area 154, the bending part 196 of the stiffener 190 facing the electrode sheet body 160 may extend onto the active material layer 130. Since the bending part 196 is prone to become a stress concentration region, the active material layer 130 may fall off. By controlling the arc radius Rn of the inner round part An of the bending part 196 to be not less than 0.5mm, and/or controlling the arc radius Ro of the outer round part Ao to be not less than 1.5mm, the stress concentration at the inner side and/or outer side of the bending part 196 may be effectively alleviated, thereby preventing the active material from falling off.

In addition, in some embodiments, a portion of the first portion 192 and the second portion 194 may extend onto the active material layer 130 (for example, as shown in FIG. 1F). By setting the range of the angle a to be 28°≤a≤45°, the stress concentration occurring between the first portion 192 and the second portion 194 adjacent to each other may be alleviated, thereby preventing the active material from falling off.

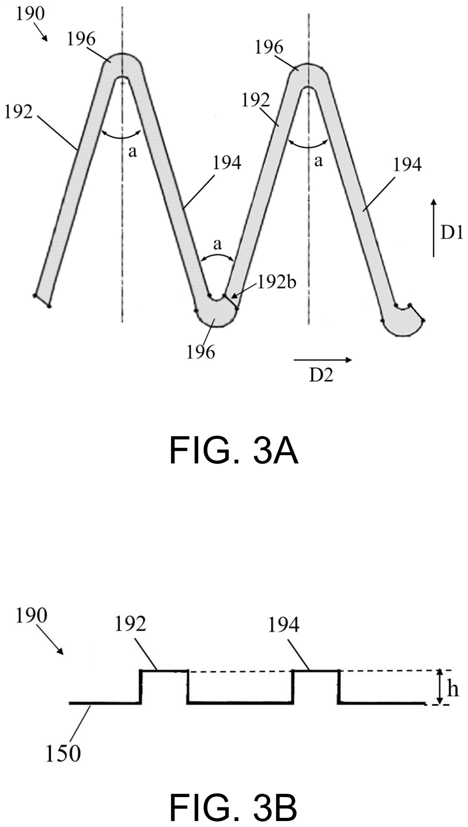

In addition, FIG. 3A is a partially enlarged schematic view of a portion of the stiffener 190 in FIG. 1F. As shown in FIG. 3A, the stiffener 190 may include multiple first portions 192 and multiple second portions 194. Two first portions 192 and two second portions 194 shown in FIG. 3A are taken as an example. In the second direction D2, the first portions 192 and the second portions 194 are alternately arranged, and the first portion 192 and the second portion 194 adjacent to each other are connected through the bending part 196. In this way, the stiffener 190 continuously extending in a W shape on the electrode tab 150 is formed through the first portions 192, the second portions 194 and the bending parts 196. Since a triangle has good stability, the stability structure similar to a triangle formed between the first portion 192 and the second portion 194 adjacent to each other may provide a good strengthening effect for the electrode tab.

Referring again to FIG. 2, the first portion 192 extends longitudinally from one end 192a thereof to another end 192b thereof. The width of the first portion 192 is set as w. A direction of the width w of the first portion 192 is perpendicular to a direction of the longitudinal extension thereof. The width w of the first portion 192 as a whole may be uniform and consistent. FIG. 3B is a schematic cross-sectional view of the stiffener 190 on the electrode tab 150, where the section is perpendicular to a thickness direction of the electrode tab 150 and passes through the electrode tab 150 in the length direction of the electrode sheet. Referring to FIG. 3B, in the thickness direction of the electrode tab 150, a recess depth of the first portion 192 relative to one surface (the surface on the recess side) of the electrode tab 150 is h. In an embodiment, the stiffener 190 may be formed by rolling, and h may be a depth of the recess of the region where the first portion 192 is located relative to one surface of the electrode tab 150 subjected to rolling. In some embodiments, a value range of w/h is 1.1 to 6.67, that is, 1.1≤w/h≤6.67. If a ratio of w/h is less than a lower limit 1.1 of the aforementioned range, w is relatively too narrow, the stress points at the edge are relatively concentrated, and fracture is prone to occur. If a ratio of w/h is greater than an upper limit 6.67 of the aforementioned range, the depth h of the first portion 192 is relatively too small. After the first portion 192 is formed, the recess depth of the first portion 192 may not meet a requirement of strengthening the electrode tab. Preferably, the range of w/h is 1.15 to 2.4, that is, 1.15≤w/h≤2.4. In this way, the problems of the stress points relatively concentrated at the edge and fracture prone to occur may be further alleviated, and the recess depth of the first portion 192 is ensured to meet the requirements.

Similarly, the second portion 194 extends longitudinally from one end 194a thereof to another end 194b thereof. A width of the second portion 194 is also set as w. A direction of the width w of the second portion 194 is perpendicular to the longitudinal extension direction of the second portion 194. The width w of the second portion 194 as a whole is uniform and consistent. It should be understood that although both the first portion 192 and the second portion 194 are set as w, the widths of the first portion 192 and the second portion 194 may be the same or different. Referring to FIG. 3B, the recess depth of the second portion 194 relative to one surface (the surface on the recess side) of the electrode tab 150 is h. It should be understood that although the recess depths of the first portion 192 and the second portion 194 are both set as h, the recess depths of the first portion 192 and the second portion 194 may be the same or different. In some embodiments, for the second portion 194, 1.1≤w/h≤6.67. If the ratio of w/h is less than the lower limit 1.1 of the above range, w is relatively too narrow, the stress points at the edge are relatively concentrated, and fracturing is prone to occur. If the ratio of w/h is greater than the upper limit 6.67 of the above range, the depth h of the second portion 194 is relatively too small. After the second portion 194 is formed, the recess depth of the second portion 194 may not meet the requirement of strengthening the electrode tab. Preferably, for the second portion 194, 1.15≤w/h≤2.4. In this way, the problems of the stress points relatively concentrated at the edge and fracture prone to occur may be further alleviated, and the recess depth of the second portion 194 is ensured to meet the requirements.

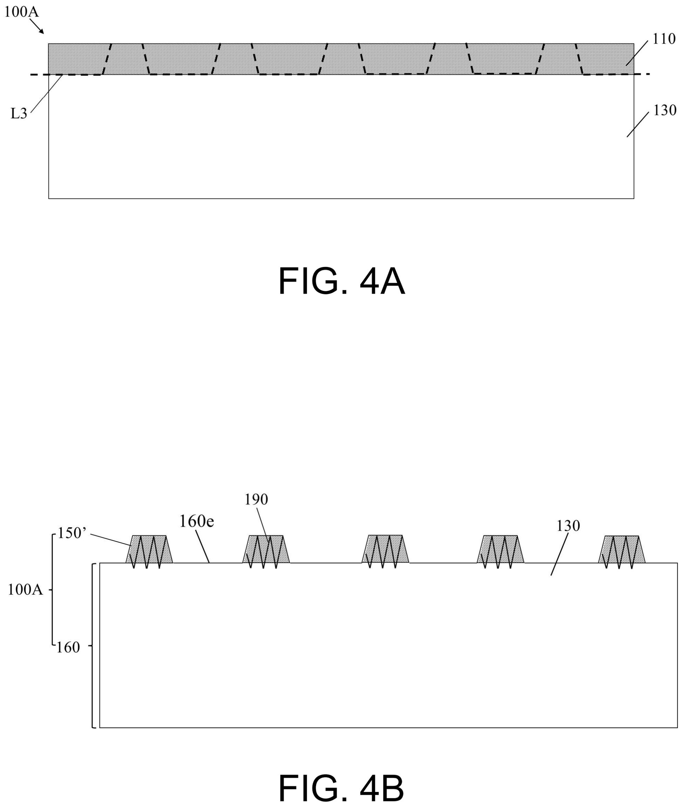

FIG. 4A to FIG. 4B are schematic views of different stages of manufacturing an electrode sheet 100A according to another embodiment of the disclosure. In this embodiment, as shown in FIG. 4A, the electrode tab may be cut on a side of the current collector 110 of the electrode sheet 100A that is not coated with the active material layer 130 according to a dashed line L3. After cutting, referring to FIG. 4B, multiple electrode tabs 150' spaced apart in a length direction of the electrode sheet 100A are formed. The electrode tab 150' extends from the edge 160e of the electrode sheet body 160 in the direction D1. In the electrode sheet 100A of this embodiment, the electrode tab 150' is only composed of the electrode tab with uncoated area. The stiffener 190 on the electrode tab 150' may partially extend to the region of the electrode sheet body 160. In other embodiments, the stiffener 190 on the electrode tab 150' may not extend to the region of the electrode sheet body 160. In this embodiment, the stiffener 190 on the electrode tab 150' may be similar to that described above with reference to FIG. 1A to FIG. 3B, and may have the benefits described above with reference to FIG. 1A to FIG. 3B.

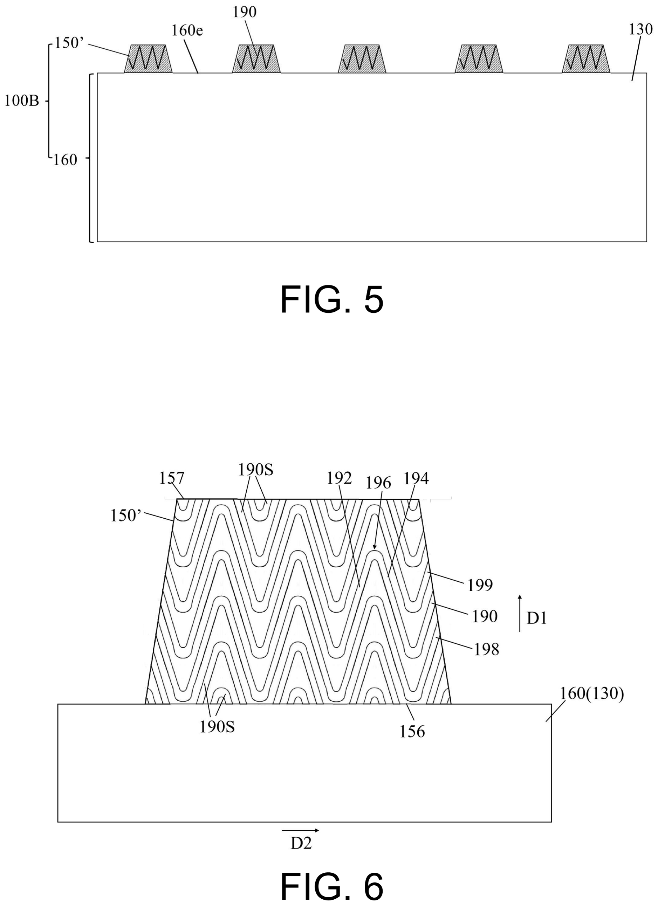

FIG. 5 is a schematic view of an electrode sheet 100B according to yet another embodiment of the disclosure. Referring to FIG. 5, in the electrode sheet 100B of this embodiment, the electrode tab 150' is only composed of the electrode tab with uncoated area. The boundary between the active material layer 130 and the electrode tab 150' may be aligned with the edge 160e of the electrode sheet body 160 along the electrode sheet length direction. In this embodiment, the stiffener 190 does not extend to the active material layer 130. The stiffener 190 on the electrode tab 150' may be similar to that described above with reference to FIG. 1A to FIG. 3B, and may have the benefits described above with reference to FIG. 1A to FIG. 3B.

FIG. 6 is a schematic view of a stiffener on the electrode tab 150' according to another embodiment of the disclosure. Referring to FIG. 6, in this embodiment, each stiffener 190 is a consecutive stiffener formed by the first portion 192, the second portion 194, and the bending part 196. Moreover, multiple consecutive stiffeners 190 may be provided on a surface of the electrode tab 150', and are spaced apart in the first direction D1, so that the consecutive stiffeners 190 form a stiffener array. By using the consecutive stiffeners 190 to form a stiffener array on the electrode tab, a more effective strengthening effect may be provided for the electrode tab, and the fracture of the electrode tab may be more effectively avoided.

A portion of another stiffener 190 may be provided between the first portion 192 and the second portion 194 of the consecutive stiffener 190. As such, portions of two adjacent consecutive stiffeners 190 in the first direction D1 may overlap in the second direction D2. In this way, the stiffeners on the electrode tab 150' are arranged more densely, which may provide a more effective strengthening effect for the electrode tab, to avoid the fracture of the electrode tab and fold toward the electrode sheet body region.

In some embodiments, the electrode tab 150' has a lower edge 156 connected to the electrode sheet body 160, and an upper edge 157 away from the electrode sheet body 160. Among the consecutive stiffeners 190, the stiffener 190 closest to the lower edge 156 is a lower consecutive stiffener 198. A region enclosed by the lower consecutive stiffener 198 and the lower edge 156 is filled with unconsecutive stiffeners 190S. The unconsecutive stiffener 190S may be a portion of a single consecutive stiffener 190, which may be understood as the stiffener 190S being conformal to and having the same size as a portion of a single consecutive stiffener 190. In this embodiment, two unconsecutive stiffeners 190S are spaced apart in the first direction D1. In other embodiments, other numbers of unconsecutive stiffeners 190S may be provided in the region between the lower consecutive stiffener 198 and the lower edge 156. In some embodiments, each stiffener 190 and each unconsecutive stiffener 190S adjacent to each other are equally spaced in the first direction D1.

Similarly, in some embodiments, among the consecutive stiffeners 190, the consecutive stiffener closest to the upper edge 157 is an upper consecutive stiffener 199. A region enclosed by the upper consecutive stiffener 199 and the upper edge 157 is filled with unconsecutive stiffeners 190S. By forming the unconsecutive stiffeners 190S between the upper consecutive stiffener 199 and the lower consecutive stiffener 198 and the corresponding upper edge 157 and lower edge 156 of the electrode tab 150', to further fill the region on the electrode tab 150' where consecutive stiffeners may not be provided, stress junction points in the region where consecutive stiffeners may not be provided may be avoided, further strengthening the supporting force to reduce the possibility of the electrode tab 150' bending. It may be understood that the unconsecutive stiffeners 190S in the region between the upper consecutive stiffener 199 and the upper edge 157 are not necessary, while the unconsecutive stiffeners 190S between the lower consecutive stiffener 198 and the lower edge 156 may comparatively strengthen the strength of the root region where the electrode tab 150' connects to the electrode sheet body 160, providing a stronger effect of additional supporting force for the electrode tab 150'.

In addition, in a case when the region between the lower consecutive stiffener 198 and the lower edge 156 is on a side close to the active material layer 130 of the electrode sheet, if no stiffener is provided in the region between the lower consecutive stiffener 198 and the lower edge 156, during a process of forming stiffeners on the electrode tab, the lower consecutive stiffener 198 close to the lower edge 156 is usually disposed on an end point (such as the end point Eb mentioned above) of the stiffener or a bending part 196 of the stiffener, stress concentration usually occurs, and the adjacent active material layer 130 may fall off due to the stress concentration. By filling the unconsecutive stiffeners 190S in the region between the lower consecutive stiffener 198 and the lower edge 156, the problem that the active material falls off caused by the stress concentration may be alleviated.

When the stiffener array shown in FIG. 6 is applied to the electrode sheet 100 in FIG. 1E or the electrode sheet 100A in FIG. 4B, a portion of the region between the lower consecutive stiffener 198 and the lower edge 156 may be located in the active material layer 130, and the unconsecutive stiffeners 190S may extend from the electrode tab with uncoated area to the active material layer 130. In this case, since a height of the unconsecutive stiffeners 190S in the first direction D1 is limited, the same pressure may make the active material bear higher pressure. As such, for a single stiffener 190S among the unconsecutive stiffeners, in the first direction D1, partial pressure may be shared by the uncoated area of the electrode tab, thereby reducing the pressure on the active material region and reducing the risk of overpressure in the active material region.

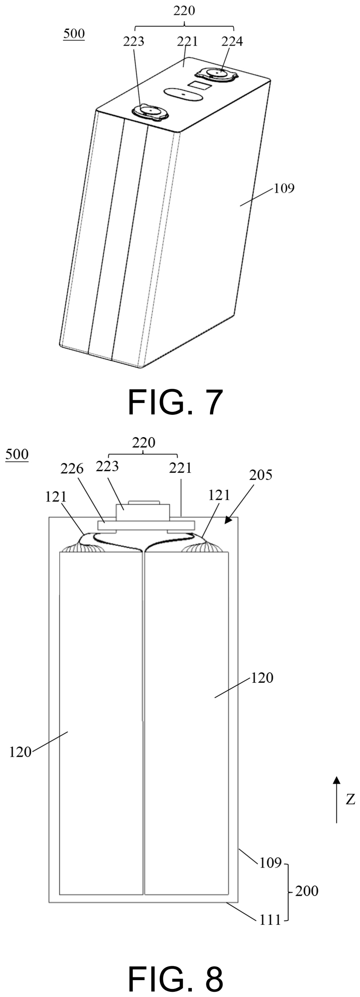

FIG. 7 is a perspective schematic view of a secondary battery according to an embodiment of the disclosure. FIG. 8 is a schematic cross-sectional view of a secondary battery according to an embodiment of the disclosure. FIG. 8 is a schematic cross-sectional view of the electrode assembly of the secondary battery in FIG. 7.

As shown in FIG. 7 and FIG. 8, a secondary battery 500 may include a shell 200. The shell 200 includes a surrounding side wall 109 and an end wall 111 connected to one end of the surrounding side wall 109. Another end of the surrounding side wall 109 opposite to the end wall 111 is provided with an opening 205. A capping assembly 220 covers the opening 205 of the shell 200, so as to define an accommodating cavity together with the shell 200. The electrode assembly 120 is located in the accommodating cavity.

A direction from the end wall 111 toward the capping assembly 220 is a height direction Z of the secondary battery 500. The height direction Z may correspond to the first direction D1 mentioned above. In this embodiment, in a thickness direction of the electrode assembly 120, two electrode assemblies 120 are stacked in the shell 200. In other embodiments, more than two electrode assemblies 120 may be disposed in the shell 200.

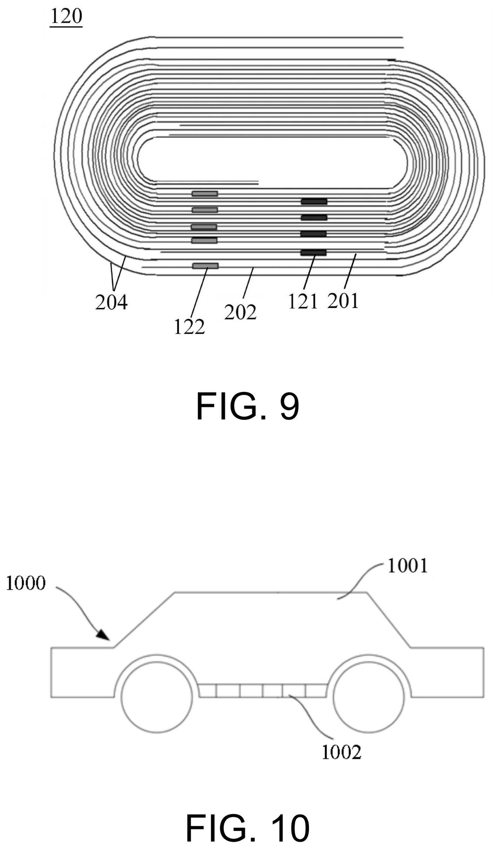

FIG. 9 is a schematic cross-sectional view of an electrode assembly of the secondary battery in FIG. 8. In some embodiments, referring to FIG. 9, the electrode assembly 120 is a wound body formed by winding a first electrode sheet 201, a second electrode sheet 202, and a separator 204 located between the first electrode sheet 201 and the second electrode sheet 202. In other embodiments, the electrode assembly 120 may also be a laminated body formed by sequentially stacking a first electrode sheet 201, a second electrode sheet 202, and a separator 204 located between the first electrode sheet 201 and the second electrode sheet 202. The electrode assembly 120 may have a flat shape. Correspondingly, the shell 200 may have a flat shape and a rectangular cuboid shape. Multiple first electrode tabs 121 of the first electrode sheet 201 and multiple second electrode tabs 122 of the second electrode sheet 202 may be stacked in the thickness direction of the electrode assembly 120 respectively.

As shown in FIG. 7 to FIG. 9, the capping assembly 220 includes a capping body 221 and a first electrode terminal 223 and a second electrode terminal 224 disposed on the capping body 221. The first electrode terminal 223 and the second electrode terminal 224 may pass through the capping body 221 and be insulated from the capping body 221. One of the first electrode terminal 223 and the second electrode terminal 224 is a positive terminal, and the other is a negative terminal. An electrode tab is disposed at one end of the electrode assembly 120 facing the capping assembly 220. In this embodiment, the first electrode tab 121 and the second electrode tab 122 at one end of the electrode assembly 120 are respectively connected to the corresponding first electrode terminal 223 and second electrode terminal 224. In some embodiments, the first electrode tab 121 and the first electrode terminal 223, and the second electrode tab 122 and the second electrode terminal 224 may be connected through corresponding connecting sheets 226. The first electrode tab 121 and the second electrode tab 122 may be welded to the connecting sheet 226 after being bent.

In some embodiments, one of the first electrode sheet 201 and the second electrode sheet 202 is a positive electrode sheet, and the other is a negative electrode sheet. In some embodiments, at least one of the positive electrode sheet and the negative electrode sheet of the electrode assembly 120 is the electrode sheet 100, the electrode sheet 100A, or the electrode sheet 100B mentioned above. Correspondingly, one of the first electrode tab 121 and the second electrode tab 122 is a positive electrode tab, and the other is a negative electrode tab. At least one of the positive electrode tab and the negative electrode tab of the electrode assembly 120 is the corresponding electrode tab 150 or electrode tab 150' of the electrode sheet 100, the electrode sheet 100A, or the electrode sheet 100B mentioned above. In some embodiments, the negative electrode sheet of the electrode assembly 120 is the electrode sheet 100, the electrode sheet 100A, or the electrode sheet 100B mentioned above, and the negative electrode tab is the corresponding electrode tab 150 or electrode tab 150'.

It should be understood that FIG. 7 to FIG. 9 are illustrated by taking a prismatic battery as an example of the secondary battery. The electrode sheet 100, the electrode sheet 100A, or the electrode sheet 100B mentioned above in the disclosure may also be used to form any other appropriate types of secondary batteries, such as pouch batteries and cylindrical batteries.

FIG. 10 is a schematic view when an electronic device is a vehicle according to an embodiment of the disclosure. Referring to FIG. 10, an electronic device 1000 is also provided in the disclosure. In the following embodiments, for convenience, the electronic device 1000 as a vehicle is taken as an example for description. A battery set 1002 is disposed inside the vehicle. The battery set 1002 may be disposed at the bottom, head, or tail of a vehicle body 1001. The battery set 1002 may be used for power supply of the vehicle. For example, the battery set 1002 may serve as an operating power source of the vehicle. A working part of the electronic device 1000 is electrically connected to the battery set 1002 to obtain electrical energy support. The vehicle may be a fuel vehicle, a gas vehicle, or a new energy vehicle. The new energy vehicle may be a pure electric vehicle, a hybrid vehicle, or an extended-range vehicle, etc., but is not limited thereto. The working part is the vehicle body, and the battery set 1002 is disposed at the bottom of the vehicle body and provides electrical energy support for driving the vehicle or operating electrical components in the vehicle. However, in some other embodiments, the electronic device 1000 may also be a mobile phone, a portable device, a notebook computer, a ship, a spacecraft, an electric toy, an electric tool, etc. The spacecraft includes airplanes, rockets, space shuttles, and spaceships, etc. The working part may obtain the electrical energy of the battery set 1002 and make corresponding working unit components, such as a blade rotating unit of a fan and a dust collection working unit of a vacuum cleaner. The electric toys include fixed or mobile electric toys, such as game consoles, electric car toys, electric ship toys, and electric airplane toys. The electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers. The embodiments of the disclosure do not impose special limitations on the electronic device 1000 mentioned above. The battery set 1002 may include multiple secondary batteries, such as the secondary battery 500 described above.

## Claims

1. An electrode sheet (100, 100A, 100B), comprising:
an electrode sheet body (160); and
an electrode tab (150, 150') extending from the electrode sheet body (160) in a first direction (D1), wherein a stiffener (190) is disposed on a surface of the electrode tab (150, 150'),
wherein the stiffener (190) at least comprises a first portion (192) and a second portion (194), and the first portion (192) and the second portion (194) are connected through a bending part (196); and
wherein an angle formed by the first portion (192) and the second portion (194) is a, 28°≤a≤45°.

2. The electrode sheet (100, 100A, 100B) according to claim 1, wherein${30}^{∘} \leq a \leq {35}^{∘} .$

3. The electrode sheet (100, 100A, 100B) according to claim 1, wherein
the bending part (196) has an inner round part (An), the inner round part (An) is connected to inner side edges of the first portion (192) and the second portion (194) opposite to each other, and an arc radius of the inner round part (An) is Rn, where Rn≥0.5mm.

4. The electrode sheet (100, 100A, 100B) according to claim 3, wherein
the bending part (196) has an outer round part (Ao), the outer round part (Ao) is connected to outer side edges of the first portion (192) and the second portion (194), and an arc radius of the outer round part (Ao) is Ro, where Ro≥1.5mm.

5. The electrode sheet (100, 100A, 100B) according to claim 4, wherein
Ro>Rn.

6. The electrode sheet (100, 100A, 100B) according to claim 1, wherein
a width of the first portion (192) is set as w;
a recess depth of the first portion (192) relative to one surface of the electrode tab (150, 150') in a thickness direction is h,
then, 1.1≤w/h≤6.67.

7. The electrode sheet (100, 100A, 100B) according to claim 6, wherein
1.15≤w/h≤2.4.

8. The electrode sheet (100, 100A, 100B) according to claim 1, wherein the stiffener (190) comprises a plurality of the first portions (192) and a plurality of the second portions (194) alternately arranged in a second direction (D2), one of the first portions (192) and one of the second portions (194) adjacent to each other are connected through the bending part (196), and the second direction (D2) is perpendicular to the first direction (D1).

9. A secondary battery (500), comprising:
an electrode assembly (120), comprising a positive electrode sheet (201), a negative electrode sheet (202), and a separator (204) located between the positive electrode sheet (201) and the negative electrode sheet (202),
wherein at least one of the positive electrode sheet (201) and the negative electrode sheet (202) is the electrode sheet (100, 100A, 100B) according to any one of claims 1-8.

10. An electronic device (1000), comprising the secondary battery (500) according to claim 9.
